# EUROPEAN PATENT SPECIFICATION

(11) **EP 2 347 559 B1**
(45) Date of publication and mention of the grant of the patent: **10.08.2016**
(21) Application number: 08875273.8
(22) Date of filing: 04.11.2008
(51) Int. Cl.: H04L 29/06, H04W 12/06

(54) **SERVICE ACCESS CONTROL**
DIENSTZUGRIFFSSTEUERUNG
CONTRÔLE D'ACCÈS À DES SERVICES

(43) Date of publication of application: 27.07.2011
(73) Proprietor: Nokia Solutions and Networks Oy, 02610 Espoo (FI)
(72) Inventor: BAUER-HERMANN, Markus, 94529 Aicha v.W. (DE); FÖLL, Uwe, 14612 Falkensee (DE); MEYER, Gerald, 82178 Puchheim-Bhf (DE); SEIDL, Robert, 82549 Königsdorf (DE)
(74) Representative: Borgström, Markus
(86) International application number: PCT/EP2008/064928
(87) International publication number: WO 2010/051833

(56) References cited:
- EP-A- 1 713 231
- WO-A-2008/082337
- US-A1- 2006 048 216

## Description

The present invention is related to the field of identity management and service access control.

Access to different services, such as Internet services, often requires user authentication. The authentication procedure is typically dependent on many factors. The kind of application protocol being used, whether account management is centralised or distributed, and the kind of user interaction being used (e.g. username/password, chip card and USB stick) are just three of many possible factors.

From the point of view of the user, the lack of unification between authentication procedures provides a barrier to the use of multiple applications. At best, this barrier is an irritation to the user. In other cases, the user may in practice be prevented from making use of some applications by problems associated with authentication.

Single-sign-on procedures have been developed to partially address the problem of accessing multiple web applications requiring different sign-on procedures. In one exemplary single-sign-on arrangement, a number of service providers trust an identity provider to authenticate a user. Once a user has completed a single authentication step at the identity provider, he is able to access his account at any web application that trusts the authentication process of that identity provider.

The availability of single-sign-on (SSO) procedures is limited. Many applications do not provide mechanisms to allow SSO to be used. Furthermore, many applications have significant restrictions that prevent many users from making use of available SSO functionality.

US2006/048216 presents a solution in which federated service providers interact within a federated environment to initiate federated operations. A point-of-contact component that provides session management capabilities at a first service provider receives a request from a client. The request is then sent, possibly using redirection through a client, to a federated user lifecycle management functional component of the first service provider, which may interact with a point-of-contact component at a second service provider to initiate a federated user lifecycle management function at the second service provider, which enlists the assistance of a federated user lifecycle management functional component at the second service provider. In response to completion of a federated user lifecycle management function, the point-of-contact component at the first service provider subsequently receives a response from the federated user lifecycle management functional component at the first service provider, and the original request can be further processed.

WO2008/082337A discloses a solution in which integrated proxy server (IAP) is inserted in the path between a user and a service provider (SP). The proxy server differentiates type of access and determines corresponding operative state to act as a liberty enabled server or as a GAA/GBA network application function. A Bootstrapping, Identity, Authentication and Session Management arrangement (BIAS) leverages on 3GPP GAA/GBA infrastructure to provide an integrated system for handling Liberty Federated SSO and 3GPP GAA/GBA bootstrapping procedures at the same time.

The present invention seeks to address at least some of the problems outlined above by a method, an apparatus and a computer program product which are characterized by what is stated in the independent claims. The preferred embodiments are disclosed in the dependent claims.

According to an aspect of the invention, there is provided a method comprising the steps of: receiving a service request (such as a web page access request) from a user; inspecting said request to determine if the request includes valid user credential data required by the service; and if required, inserting user credential data obtained from an identity provider into said request. User credential data may be added if the data provided in the request is missing, incomplete or incorrect.

According to another aspect of the invention, there is provided an apparatus (such as a gateway) comprising: an input for receiving a service request from a user; an inspection module for inspecting the service request to determine whether the request includes valid user credential data required by the service; a user credential insertion module for inserting user credential data obtained from an identity provider into said service request (if required); and an output for forwarding the service request to the service. User credential data may be added if the data provided in the request is missing, incomplete or incorrect.

According to a further aspect of the invention, there is provided an apparatus (such as a gateway) comprising: means for receiving a service request from a user; means for inspecting the service request to determine whether the request includes valid user credential data required by the service; means for inserting user credential data obtained from an identity provider into said service request (if required); and means for forwarding the service request to the service. User credential data may be added if the data provided in the request is missing, incomplete or incorrect.

In some embodiments of the invention, a gateway can be used to inspect data packets sent by a user to a service provider. The gateway can also be used to inject authentication data into the data packets, if required. This works not only in the case of services that already have single-sign-on functionality, but also in the case of classical (i.e. non SSO-based) authentication. In the case of communication with websites, it does not matter if the protocol used is http or https. Thus, aspects of the invention combine packet inspection and modification technology with identity management technology to provide an authorisation mechanism.

The invention can provide a user with a single-sign-on like experience for all services (if configured by the user). Authentication data can be stored at a centralised entity, such as an identity provider, therefore the functionality of the present invention does not need to be bound to a specific device or location; this can lead to increased security.

In some forms of the invention, the step of inspecting the request to determine if the request includes valid user credential data includes determining if user credential data is included in the request. In the event that user credential data is included in the request, the user credential data may be compared with user credential data stored at the identity provider.

In some forms of the invention, user credential data included in the original request is modified or replaced, if required. Further, in some forms of the invention, the user credential data included in the original request takes the form of dummy data. In other forms of the invention, user credential data is not included in the original request, and is injected into the request using data obtained from the identity provider.

In some embodiments of the invention, the service request is a service access request. In other embodiments of the invention, the service request includes requests to use a service that has already been accessed (e.g. where each data request requires user credentials to be provided).

The said service request may include an indication of the service being accessed. For example, in some embodiments of the invention, the gateway can be used to provide access to a plurality of services, each having its own access requirements. The services may include a web server and/or an email server. A variety of other services may be provided instead of, or in addition to, web and/or email services. A plurality of services, some making use of different protocols, may be accessible.

The service being accessed may not be identified directly in a service request issued by the user. For example, the server may be identified by a code, such as "secret website" or "secret server provider 1". The code may be identifiable by the identity provider and may be replaced with the real server identifier under the control of the gateway.

Some aspects of the invention include the step of authenticating the user. For example, a one-time user authentication towards the identity provider may be carried out at the gateway, at a network provider's access network, or at a user device, in combination with the identity provider. This step may precede all subsequent service requests.

According to an another aspect of the invention, there is provided a computer program product comprising: means for inspecting a service request to determine whether the request includes valid user credential data required by a service; means for inserting user credential data obtained from an identity provider into said service request (if required); and means for forwarding the service request to the service. User credential data may be added if the data provided in the request is missing, incomplete or incorrect. The computer program product may include a computer readable medium. The computer program product may include any of the features of the invention described above.

Exemplary embodiments of the present invention are described below, by way of example only, with reference to the following numbered drawings.
Figure 1 is a block diagram of a system in accordance with an aspect of the present invention;
Figure 2 is a message sequence in accordance with an aspect of the present invention;
Figure 3 is a block diagram of a system in accordance with an aspect of the present invention;
Figure 4 is a message sequence in accordance with an aspect of the present invention;
Figure 5 is a block diagram of a system in accordance with an aspect of the present invention; and
Figure 6 a block diagram of a system in accordance with an aspect of the present invention.

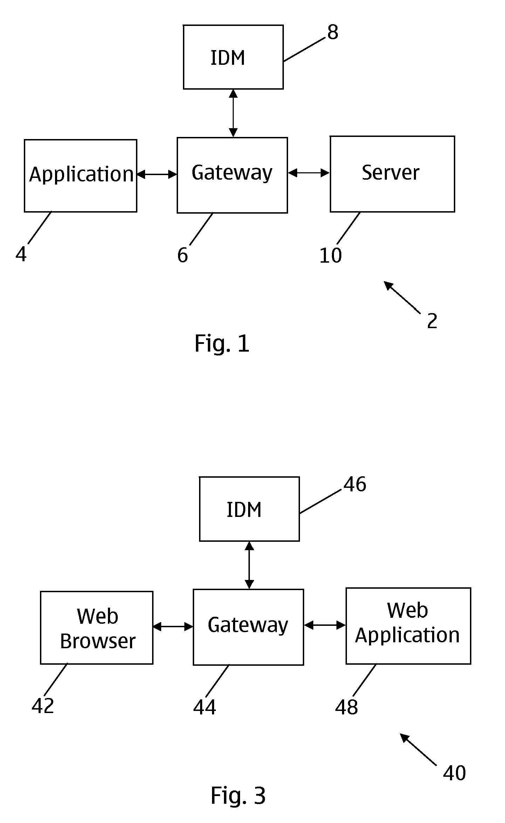

Figure 1 is a block diagram of a system, indicated generally by the reference numeral 2, in accordance with an aspect of the present invention. The system 2 comprises an application 4, a gateway 6, an identity management system (IDM) 8 and a server 10. The gateway 6 is provided between the application 4 and the server 10. The gateway 6 is also operatively coupled to the IDM 8.

Typically, the application 4 is under the control of a user and the server 10 is at a service provider. In use, the user at the application 4 provides credentials (such as a username and password, although, of course, other credentials could be used) to the gateway 6. The gateway 6 and the identity management system 8 may have a secured connection. The gateway 6 can use the secured connection to verify the user credentials at the identity management system (IDM) 8 in order to authenticate the user. Once authenticated, any service requests issued by the user via the application 4 are monitored by the gateway 6.

As discussed in detail below, the gateway 6 is adapted to monitor individual packets of data passing through the gateway. Furthermore, the gateway 6 is adapted to modify packets of data to insert the appropriate credentials for the user for the particular service that is being accessed.

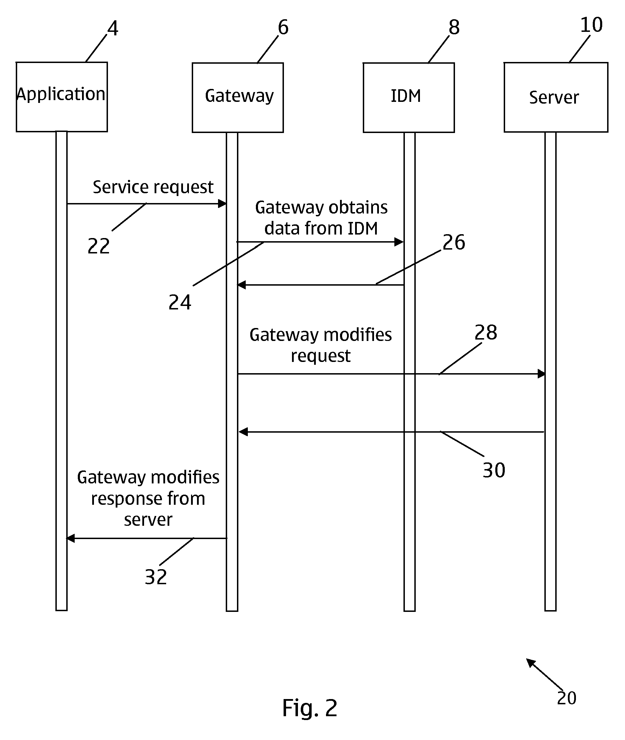

Figure 2 shows a sequence of messages, indicated generally by the reference numeral 20, demonstrating an exemplary use of the system 2 described above.

The sequence 20 starts with the application 4 sending a service access request 22 to the server 10 via the gateway 6. Assuming that the user has already been authenticated by the gateway 6, the gateway identifies the access request and seeks the required user credentials from the IDM 8 in message exchange 24 and 26. The gateway 6 modifies the request 22 to generate a modified request 28, which modified request is sent from the gateway 6 to the server 10. The server 10 responds to the request, and sends the response to the gateway 6. The gateway forwards the response to the application 4 in a further message 32.

Thus, the sequence 20 shows how packets of data sent from an application 4 (such as a user interface) to a server 10 (such as a server at a service provider) are inspected and, if necessary, modified, in order to provide user credentials to enable the application to access the server.

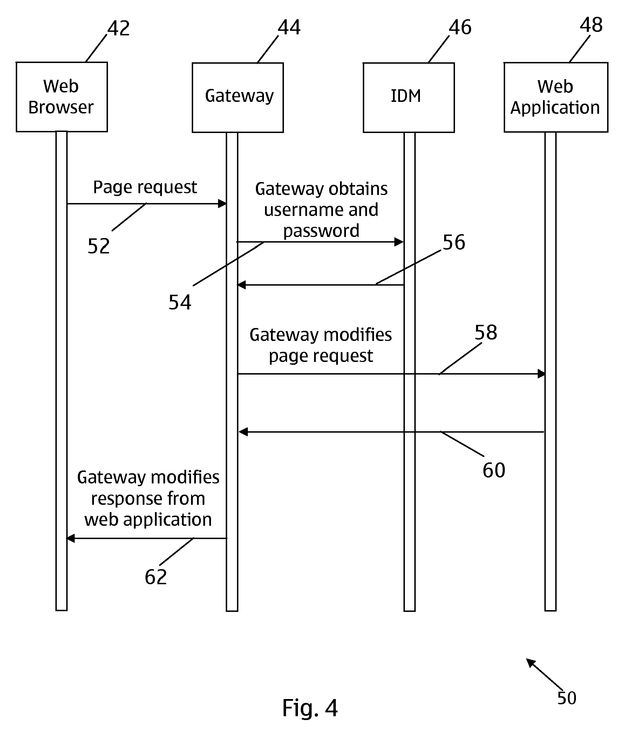

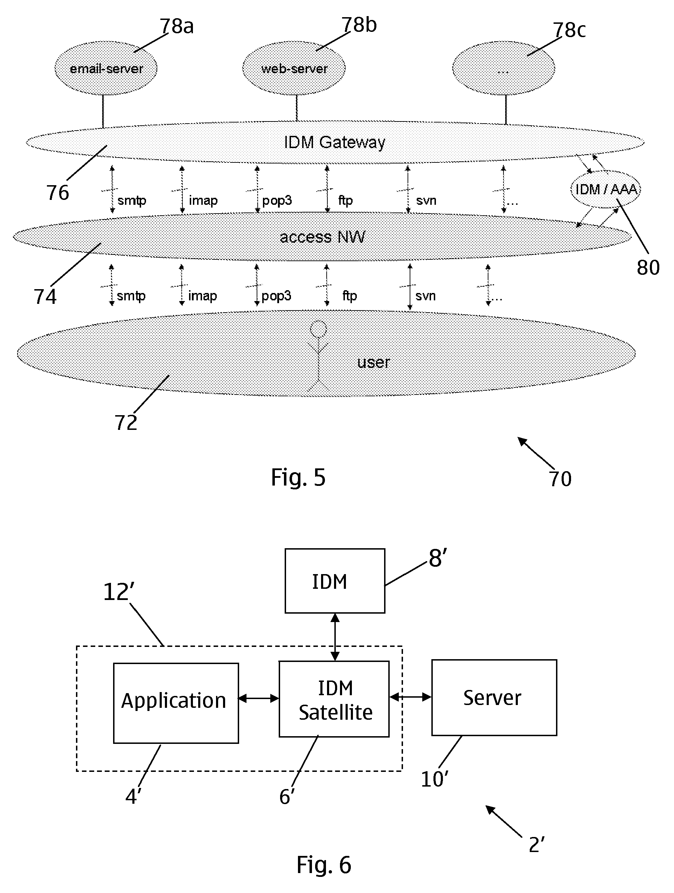

The application 4 and the server 10 may take many different forms. In one exemplary embodiment of the invention, the server 10 is a web server and the application 4 is a web browser. Such an arrangement is described below with reference to Figures 3 and 4. The present invention is not, however, limited to use with web browsers and web servers. Data packets of many different protocols can be inspected and modified in accordance with the arrangement described above with reference to Figure 2. This is discussed further below with reference to Figure 5.

Figure 3 is a block diagram of a system, indicated generally by the reference numeral 40, in accordance with an embodiment of the present invention. The system 40 comprises a web browser 42, a web application 48, a gateway 44 between the web browser and the web application and an identity management system (IDM) 46 operatively coupled to the gateway. The system 40 is similar to the system 2 described above with reference to Figure 1 in which the web browser 42 is an example of an application 4 and the web application 48 is an example of a server 10.

An exemplary use of the system 40 is described below with reference to a message sequence 50 shown in Figure 4.

Assume that the user uses the web browser 42 to access the web application 48 and that the web application requires the user to enter a username and password in order to gain access to the web application. In this example, the username is "john.doe" and the password is "secret".

The user's username and password details for that particular web application 48 are stored by the IDM 46. When the user seeks access to a page of the web application 48, he sends a page request message 52 to the web application 48 via the gateway 44. The page access message might take the following form:
"HTTP POST /login.jsp HTTP/1.1
Host: example.com
Username=12345678&Password=987654321"

The gateway 44 inspects the data packets passing through it and recognises that the data packets include user credential data in the form of username and password fields (including the dummy username "12345678" and the dummy password "987654321"). The gateway knows the identity of the user, since that user has already authenticated himself at the IDM 46. The required username and password data are stored at the IDM 46 and the gateway obtains that data in message exchanges 54 and 56 with the IDM.

Next, the gateway 44 modifies the service request by replacing the dummy username with the username "john.doe" and replacing the dummy password with the password "secret" and forwards the modified request to the web application 48 (message 58). The modified page request 58 may take the following form:
"HTTP POST /login.jsp HTTP/1.1
Host: example.com
Username=john.doe&Password=secret".

The web application 48 responds to the request and sends the response to the gateway 44 (message 60). The gateway 44 forwards the response to the web browser 42 in a further message 62.

Features of existing firewalls and virus scanners can be used to implement some of the features of the gateways of the present invention. Firewalls are intended to limit incoming and outgoing traffic according to certain rules. These rules may be based on source and destination IP addresses, source and destination port numbers, used protocol, and content of data packets. Rules can be combined and lead to quite complex behaviour of a firewall. These rules will result in actions like: reject packet, drop packet, forward packet, change IP addresses in packet and change port numbers in packet.

Sometimes several packets have to be put together and later disassembled in order to recognize a data flow or there must be some book-keeping to recognize a session and its matching packets.

For recognition and/or altering of packet content (in contrast to packet headers) so-called packet-inspection is applied. This requires knowledge of the used protocols and the structure of their packet formats. Packet inspection is also useful for virus detection.

In general, firewalls are applied to separate networks from each other and to control which traffic may cross the border between the networks. This is done very often at the border between local ("private") networks and the open ("public") internet. But also the borders between network segments within large organisations may be controlled by firewalls.

Although known firewalls and virus scanners can be used to inspect data packets passing through the firewall for potentially damaging code, such firewalls and virus scanners are not used to modify requests, for example by injecting user credentials into requests. Furthermore, existing firewalls and virus scanner do not adapt their behaviour to the requests received from users. The intention of known firewalls is to filter and restrict communication, whereas the intention of the present invention focuses on enrichment of users' convenience.

Thus, existing firewalls can be used to inspect packets of data in accordance with the teaching of the present invention. Furthermore, existing firewalls can be modified to provide mechanisms for injecting user credentials into data packets, in accordance with the teachings of the present invention.

The exemplary embodiment of the invention described above with reference to Figures 3 and 4 relates to web applications, but the invention is not restricted to web applications.

Figure 5 is a block diagram of a system, indicated generally by the reference numeral 70, in accordance with an aspect of the present invention. The system 70 comprises a user 72, an access network 74, a gateway 76, a plurality of servers 78a, 78b and 78c and an identity management module 80. In the example of Figure 5, the server 78a is an email server and the server 78b is a web server; other servers could be used with the present invention. The access network 74 may be the Internet.

The user 72 communicates with one or more of the servers 78a, 78b and 78c via the access network 74 and the gateway 76. The IDM 80 communicates with the access network 74 and the gateway 76.

As shown in Figure 5, the user 72 may communicate with the end server (78a, 78b or 78c) using one of a number of protocols. By way of example, the protocols smtp, imap, pop3, ftp and svn are suggested in Figure 5. Another possible protocol is http. Clearly, many other protocols could be used (either currently known or currently unknown). The access network passes these messages to the gateway 76.

As discussed above with reference to Figures 1 to 4, the gateway 76 inspects the messages being sent from the user to one of the end servers to determine whether any user credential data is included. The gateway 76 verifies any such user credential data with the IDM 80 and modifies or inserts data, if required.

By way of example, consider a scenario in which a user wishes to send an email using the smtp protocol. In order to do so, an email client at the user 72 can communicate with the IDM gateway 76. The gateway 76 retrieves the correct credentials from the IDM 80 and inserts the credentials into the message flow from the user to the email server 78a. Thus, the user does not have to take care of the valid credentials.

The system 70 can be viewed as a more generalised version of the systems 2 and 40 described above with reference to Figures 1 to 4. Indeed, if the user 72 is using a web browser (such as the web browser 42) to access a web server 78b, then the arrangement of Figure 5 can be used to implement the message flow 50 described above with reference to Figure 4.

In the exemplary embodiments discussed above, it is assumed that the gateways 6, 44 and 76 are separated from the user 4, 42 and 72 and are located somewhere in the network (e.g. at the user's home network or in the access network, or somewhere else). Figure 6 is a block diagram of a system, indicated generally by the reference numeral 2', that is a variant of the system 2 described above with reference to Figure 1. The system 2' comprises an application 4', an IDM satellite 6', an identity management system (IDM) 8' and a server 10'. The IDM satellite 6' is provided between the application 4' and the server 10' and is also operatively coupled to the IDM 8'. The IDM satellite 6' is part of a user client 12' that includes the application 4'. The IDM satellite 6' may, for example, be provided as a software module at the application 4'.

The IDM satellite 6' may, for example, provide a series of plug-ins, with one plug-in being provided for each protocol supported. The application 4' may connect to the IDM satellite 6', which in turn provides the connection to the end service via the Internet. In this way, the IDM satellite 6' performs as a "man in the middle". The IDM satellite inspects data packets that it receives by passing the data packets to the appropriate plug-in, retrieves the user's real account information from the IDM 8', replaces the user's data inside the protocol packet with the data received from the IDM and forwards the modified packets to the server 10'. If the server 10' requests the user's authentication, the IDM satellite 6' can respond without having to forward the request to the application 4'.

Furthermore, if the IDM satellite 6' is not required to be installed locally, it can easily be transported using a memory device, such as a USB memory stick, together with the user's private PGP key and thus provide authenticated access to any service supported by the IDM satellite, from any device.

By way of example, the system 2' may be used to provide a user with access to an email application at email server 78a. The IDM satellite 6' provides POP3 and SMTP protocols. In use, the user may, for example, enter "localhost" as the name of the email server and send the server's real address as the user name. The IDM satellite 6' may then filter out the server's address, connect to the IDM 8', authenticate the user based on a particular authentication mechanism, retrieve the user's real account data, replace the data within the POP3 and SMTP packages, open the connection to the real email server 78a it previously extracted and then act towards the email client as the email server and towards the real server as an email client by simply forwarding every message it receives in every direction.

In the embodiments of the invention described above, the user specifies a particular application being accessed (for example, by providing a uniform resource locator (URL) at the web browser 42). This is not essential. For example, the data insertion mechanisms provided by the present invention can be used to add details regarding the server that is being accessed. For example, the user may indicate a desire to access a server referred to as "secret website 1". The address for this website may be stored at the identity management system. Thus, the user may provide the following instruction:
"Access request for Secret Website 1.
Username: dummy username
Password: dummy password"

In response, the gateway may obtain the address for the secret website, as well as the appropriate username and password pair to provide the user with access to that website. An advantage of such an arrangement is that it is not possible to obtain information regarding the service being accessed from the information entered by the user alone, thus security can be improved.

Another exemplary application of the present invention involves the use of a service, wherein the password of a user is changed by the service. In such an arrangement, provided the new password is known to the identity management system, the user does not need to be informed of the new password. Thus, each time a user connects to the application, the new password is obtained from the identity management system and applied, without needing to inform the user. This is not only highly convenient for the user, but can, in some circumstances, increase security.

The embodiments of the invention described above include the use of incorrect user credentials (such as dummy username and password details), which are corrected at a gateway. This is not essential. In some forms of the invention, user credentials are not provided in a request issued by a user. The gateway may be used to recognise that a request requiring user credentials has been issued and to provide the missing user credentials, which credentials are provided by an identity provider.

In some embodiments of the invention, user credentials are only injected into a service access request when the service is known to the gateway. For example, the gateway may only insert user credentials into a request to access a website when that website is known, or even when a website is well known (by way of example, a website may be considered to be known or well known if it is known to the IDM database, for example if the IDM has already stored some credentials for the website). This feature may be implemented in many different ways. For example, if communications between the gateway and the web server are based on HTTPS, the gateway might check the relevant certificate. Otherwise, the gateway can perform other checks, such as of the IP-address or the DNS name resolution. Another possibility is that only intranet sites are trusted by the gateway.

The present invention could be used in many applications not specifically discussed above. By way of example, the invention could be used in email signature, secure information transfer, and adding protocol dependent tokens between user clients and applications.

The embodiments of the invention described above are illustrative rather than restrictive. It will be apparent to those skilled in the art that the above devices and methods may incorporate a number of modifications without departing from the general scope of the invention. It is intended to include all such modifications within the scope of the invention insofar as they fall within the scope of the appended claims.

## Claims

1. A method comprising:
providing a user client (12')
performing the following:
receiving a service request from a user;
inspecting said request to determine if the request includes valid user credential data required by a service (10') to which the service request is directed;
if required, inserting user credential data obtained from an identity provider (8') into said request; and
forwarding the request to the service.

2. A method as claimed in claim 1, wherein said inspecting step includes determining if user credential data are included in the request.

3. A method as claimed in claim 1 or claim 2, wherein said inspecting step includes comparing user credential data included in the service request with data stored at the identity provider.

4. A method as claimed in any preceding claim, wherein the service request is a service access request and/or said service request includes an indication of the service being accessed.

5. A method as claimed in any preceding claim, wherein said inserting step comprises replacing dummy user credential data in said service request with user credential data stored at the identity provider.

6. A method as claimed in any preceding claim, wherein said service request includes an indication of the service being accessed and the indication of the service being accessed takes the form of a code that is identifiable by the identity provider.

7. A method as claimed in any preceding claim, wherein said service comprises a web service and/or an email service

8. A method as claimed in any preceding claim, wherein said inspecting step comprising inspecting packets of data and/or said inserting step includes modifying packets of data.

9. A method as claimed in any preceding claim, further comprising authenticating the user.

10. An apparatus that is part of a user client and comprises:
an input for receiving a service request from a user;
an inspection module for inspecting the service request to determine whether the request includes valid user credential data required by the service;
a user credential insertion module for inserting user credential data obtained from an identity provider into said service request; and
an output for forwarding the service request to the service.

11. An apparatus as claimed in claim 10, wherein said inspection module is adapted to inspect packets of data.

12. An apparatus as claimed in claim 10 or claim 11, wherein said insertion module is adapted to modify packets of data.

13. An apparatus as claimed in any one of claims 10 to 12, wherein said apparatus is a gateway.

14. An apparatus as claimed in any one of claims 10 to 13, further comprising the said identity provider.

15. A computer program product comprising program code which, when run on a computing apparatus, causes the computing apparatus to perform a method according to any of the claims 1 to 9.

## Patentansprüche

1. Verfahren, umfassend:
Bereitstellen eines Benutzer-Clients (12'), der Folgendes ausführt:
Empfangen einer Dienstanfrage von einem Benutzer;
Prüfen der Anfrage, um zu ermitteln, ob die Anfrage gültige Berechtigungsdaten des Benutzers umfasst, die für einen Dienst (10') erforderlich sind, an den die Dienstanfrage gerichtet ist;
falls erforderlich, Eingeben der Berechtigungsdaten des Benutzers, die von einem Identitätsanbieter (8') erhalten wurden, in die Anfrage; und
Weiterleiten der Anfrage an den Dienst.

2. Verfahren nach Anspruch 1, wobei der Prüfschritt ein Ermitteln umfasst, ob die Berechtigungsdaten des Benutzers in der Anfrage enthalten sind.

3. Verfahren nach Anspruch 1 oder Anspruch 2, wobei der Prüfschritt ein Vergleichen der in der Dienstanfrage enthaltenen Berechtigungsdaten des Benutzers mit den bei dem Identitätsanbieter gespeicherten Daten umfasst.

4. Verfahren nach einem der vorangehenden Ansprüche, wobei die Dienstanfrage eine Dienstzugriffsanfrage ist und/oder die Dienstanfrage eine Anzeige des Dienstes enthält, auf den zugegriffen werden soll.

5. Verfahren nach einem der vorangehenden Ansprüche, wobei der Eingabeschritt ein Ersetzen von Platzhalterberechtigungsdaten des Benutzers, die in der Dienstanfrage enthalten sind, durch Berechtigungsdaten des Benutzers umfasst, die bei dem Identitätsanbieter gespeichert sind.

6. Verfahren nach einem der vorangehenden Ansprüche, wobei die Dienstanfrage eine Anzeige des Dienstes enthält, auf den zugegriffen wird, und wobei die Anzeige des Dienstes, auf den zugegriffen wird, die Form eines Codes annimmt, der durch den Identitätsanbieter identifizierbar ist.

7. Verfahren nach einem der vorangehenden Ansprüche, wobei der Dienst einen Web-Dienst und/oder einen E-Mail-Dienst umfasst.

8. Verfahren nach einem der vorangehenden Ansprüche, wobei der Prüfschritt ein Prüfen von Datenpaketen umfasst und/oder der Eingabeschritt ein Verändern der Datenpakete umfasst.

9. Verfahren nach einem der vorangehenden Ansprüche, das außerdem ein Authentifizieren des Benutzers umfasst.

10. Vorrichtung, die Teil eines Benutzer-Clients ist und umfasst:
einen Eingang zum Empfangen einer Dienstanfrage von einem Benutzer;
ein Prüfmodul zum Prüfen der Dienstanfrage, um zu ermitteln, ob die Anfrage gültige Berechtigungsdaten des Benutzers enthält, die für den Dienst erforderlich sind;
ein Eingabemodul für eine Benutzerberechtigung zum Eingeben der Berechtigungsdaten des Benutzers, die von einem Identitätsanbieter erhalten wurden, in die Dienstanfrage; und
einen Ausgang zum Weiterleiten der Dienstanfrage an den Dienst.

11. Vorrichtung nach Anspruch 10, wobei das Prüfmodul geeignet ist, um Datenpakete zu prüfen.

12. Vorrichtung nach Anspruch 10 oder Anspruch 11, wobei das Eingabemodul geeignet ist, um Datenpakete zu verändern.

13. Vorrichtung nach einem der Ansprüche 10 bis 12, wobei die Vorrichtung ein Gateway ist.

14. Vorrichtung nach einem der Ansprüche 10 bis 13, die außerdem den Identitätsanbieter umfasst.

15. Computerprogrammprodukt, das einen Programmcode umfasst, der, wenn er in einer Computervorrichtung abläuft, die Computervorrichtung veranlasst, ein Verfahren nach einem der Ansprüche 1 bis 9 auszuführen.

## Revendications

1. Procédé comprenant les étapes consistant à :
fournir un client utilisateur (12') effectuant ce qui suit :
recevoir une demande de service en provenance d'un utilisateur ;
inspecter ladite demande pour déterminer si la demande inclut des données valides justificatives de l'identité de l'utilisateur requises par un service (10') auquel la demande de service est adressée ;
si nécessaire, insérer des données justificatives de l'identité de l'utilisateur obtenues auprès d'un fournisseur d'identité (8') dans ladite demande ; et
transférer la demande au service.

2. Procédé selon la revendication 1, dans lequel ladite étape d'inspection inclut la détermination de ce que des données justificatives de l'identité de l'utilisateur sont ou non incluses dans la demande.

3. Procédé selon la revendication 1 ou la revendication 2, dans lequel ladite étape d'inspection inclut la comparaison de données justificatives de l'identité de l'utilisateur incluses dans la demande de service avec des données stockées chez le fournisseur d'identité.

4. Procédé selon l'une quelconque des revendications précédentes, dans lequel la demande de service est une demande d'accès à un service et/ou ladite demande de service inclut une indication du service auquel il est accédé.

5. Procédé selon l'une quelconque des revendications précédentes, dans lequel ladite étape d'insertion comprend le remplacement de données fictives justificatives de l'identité de l'utilisateur dans ladite demande de service par des données justificatives de l'identité de l'utilisateur stockées chez le fournisseur d'identité.

6. Procédé selon l'une quelconque des revendications précédentes, dans lequel ladite demande de service inclut une indication du service auquel il est accédé et l'indication du service auquel il est accédé prend la forme d'un code qui est identifiable par le fournisseur d'identité.

7. Procédé selon l'une quelconque des revendications précédentes, dans lequel ledit service comprend un service Web et/ou un service de messagerie électronique.

8. Procédé selon l'une quelconque des revendications précédentes, dans lequel ladite étape d'inspection comprenant l'inspection de paquets de données et/ou ladite étape d'insertion comprend ou comprennent la modification de paquets de données.

9. Procédé selon l'une quelconque des revendications précédentes, comprenant en outre l'authentification de l'utilisateur.

10. Appareil faisant partie d'un client utilisateur, comprenant :
une entrée destinée à recevoir une demande de service en provenance d'un utilisateur ;
un module d'inspection destiné à inspecter la demande de service pour déterminer si la demande inclut des données valides justificatives de l'identité de l'utilisateur requises par le service ;
un module d'insertion de justificatif d'identité de l'utilisateur destiné à insérer des données justificatives de l'identité de l'utilisateur obtenues auprès d'un fournisseur d'identité dans ladite demande de service ; et
une sortie destinée à transférer la demande de service au service.

11. Appareil selon la revendication 10, dans lequel ledit module d'inspection est adapté pour inspecter des paquets de données.

12. Appareil selon la revendication 10 ou la revendication 11, dans lequel ledit module d'insertion est adapté pour modifier des paquets de données.

13. Appareil selon l'une quelconque des revendications 10 à 12, dans lequel ledit appareil est une passerelle.

14. Appareil selon l'une quelconque des revendications 10 à 13, comprenant en outre ledit fournisseur d'identité.

15. Produit-programme d'ordinateur comprenant un code de programme qui, lorsqu'il est exécuté sur un appareil informatique, fait mettre en oeuvre à l'appareil informatique un procédé selon l'une quelconque des revendications 1 à 9.
